# EUROPÄISCHE PATENTSCHRIFT

(11) **EP 2 130 635 B1**
(45) Veröffentlichungstag und Bekanntmachung des Hinweises auf die Patenterteilung: **24.08.2011**
(21) Anmeldenummer: 08104227.7
(22) Anmeldetag: 03.06.2008
(51) Int. Cl.: B23K 9/08

(54) **Magnetarc-Schweissverfahren für Werkstücke mit offenen Querschnitten**
Magnetic arc welding procedure for workpieces with open cross-sections
Procédé de soudure à arc magnétique pour pièces à usiner dotées de sections transversales ouvertes

(43) Veröffentlichungstag der Anmeldung: 09.12.2009
(73) Patentinhaber: Georg Fischer Automotive AG, 8201 Schaffhausen (CH)
(72) Erfinder: Löhken, Thomas, 78462 Konstanz (DE)
(74) Vertreter: De Colle, Piergiacomo

(56) Entgegenhaltungen:
- EP-A2- 1 418 016
- GB-A- 2 010 029
- JP-A- 63 260 679
- US-A- 4 219 722
- DATABASE WPI Week 197652 Thomson Scientific, London, GB; AN 1976-97063X XP002547300 & JP 51 129841 A (DENGENSHA SEISAKUSHO KK) 11. November 1976 (1976-11-11) -& JP 51 129841 A (DENGENSHA MFG CO LTD) 11. November 1976 (1976-11-11)
- DATABASE WPI Week 19772 Thomson Scientific, London, GB; AN 1977-02644Y XP002547301 & JP 51 135849 A (DENGENSHA SEISAKUSHO KK) 25. November 1976 (1976-11-25) -& JP 51 135849 A (DENGENSHA MFG CO LTD) 25. November 1976 (1976-11-25)

## Beschreibung

Die Erfindung betrifft Verfahren zum Magnetarc-Schweissen für metallische Werkstoffe, wobei mindestens eines der zu verschweissenden Werkstücke einen offenen Querschnitt aufweist. Ein solches Verfahren ist aus der JP 51-129 841 bekannt.

Derzeit sind Magnetarc-Schweissverfahren bekannt, bei denen in der Regel die zu verbindenden Werkstücke rotationssymmetrische Querschnitte aufweisen. Diese meist rohrförmigen Werkstücke werden in Aufnahmen fluchtend eingespannt und an den Schweissstellen aneinander gefahren. Nach Einschalten eines Magnetfeldes und des für das Schweissen erforderlichen Stromes werden die Werkstücke auf einen definierten Abstand gebracht und ein Lichtbogen wird gezündet. Ein Magnetfeld eines Magnetspulensystems sorgt dafür, dass der Lichtbogen in Rotation versetzt wird. Damit werden die zu verschweissenden Stirnflächen gleichmässig erhitzt. Anschliessend werden die zu verschweissenden Flächen der Werkstücke aneinandergepresst. Das Magnetfeld und der Schweissstrom werden abgeschaltet.

Dieses Verfahren wird bereits für Werkstücke mit geschlossenen Querschnittten verwendet. Solche Magnetarc-Schweissverfahren sind beispielsweise in der DE 10 2006 012 826 A1, der Offenlegungsschrift DE 2258417 und der WO 2006/000330 beschrieben.

Der Erfindung liegt die Aufgabe zugrunde, ein Magnetarc-Schweissverfahren für zu verschweissende Werkstücke mit offenen Querschnitten zu schaffen.

Die Lösung der Aufgabe wird erfindungsgemäss dadurch gelöst, dass die beiden Werkstücke eingespannt und aneinander gefahren werden, wobei der offene Querschnitt eines Werkstücks mittels eines geeigneten metallischen Hilfsteils zu einem leitenden geschlossen Bereich überbrückt wird, dass nach Einschalten eines Magnetfeldes eines Magnetspulensystems und des für das Schweissen erforderlichen Stromes die Werkstücke auf einen definierten Abstand gebracht und ein Lichtbogen gezündet wird, dass das Magnetfeld des Magnetspulensystems den Lichtbogen in Rotation versetzt wird, dass die zu verschweissenden Stirnflächen gleichmässig erhitzt werden, dass anschliessend die zu verschweissenden Flächen der Werkstücke aneinandergepresst werden, wobei der offene Flächenbereich (13) des Hilfsteils (4) nicht oder nur sehr schwach an die gegenüberliegende Fläche (8) des Werkstückes (1) angepresst wird.

Das Prinzip des Magnetarc-Schweissverfahren ist schon lange bekannt. Es konnte aber bisher nur für Werkstücke mit geschlossenen Querschnitten verwendet werden. Da für die Anwendung des Magnetarc-Schweissverfahren geschlossene Querschnitte der Werkstücke erforderlich sind, liegt der Kern der Erfindung darin, das Werkstück mit dem offenen Querschnitt während des eigentlichen Schweissprozesses mittels eines beliebig geformten Teiles hilfsweise zu schliessen. Während des Anpressens der zu verschweissenden Werkstücke wird das Hilfsteil nicht oder nur sehr schwach an die Stirnseite des gegenüber liegenden Teiles angepresst, um eben die Verschweissung des Hilfsteils zu vermeiden. Insbesondere kann das Hilfsteil nach dem Schweissvorgang entfernt werden.

Weitere bevorzugte Ausgestaltungen des Verfahrens sind in den Unteransprüchen angegeben. Insbesondere sind der offene Querschnitt eines zu verschweissenden Werkstücks sowie die Form des Hilfsteils nicht auf eine kreisförmige Form beschränkt. Die Ausgestaltung des Hilfsteils kann dem ebenfalls beliebig ausgebildeten offenen Querschnitt des zu verschweissenden Werkstücks geeignet angepasst werden. Es kommt darauf an, dass ein geschlossener leitender Bereich für die Bildung eines aufgrund eines Magnetfeldes rotierenden Lichtbogens entsteht.

Das erfindungsgemässe Verfahren und ist beispielhaft in den Zeichnungen dargestellt. Es zeigen:
- Fig. 1: das Prinzip des Magnetarc-Schweissverfahren nach dem Stand der Technik
- Fig.2a und b: eine schematische Darstellung eines Beispiels des erfindungsgemässen Magnetarc-Schweissverfahrens

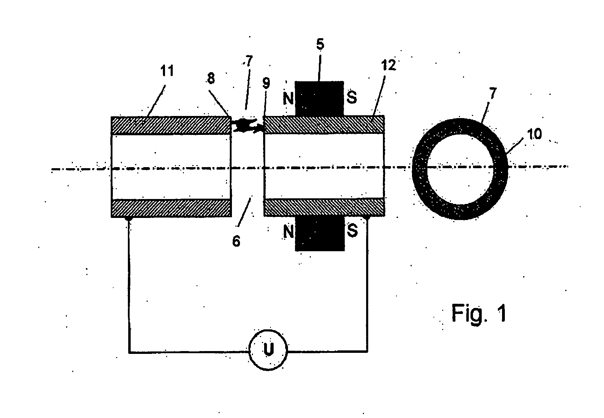

Die Figur 1 zeigt das Magnetarc-Schweissverfahren nach dem Stand der Technik. Die beiden zu verschweissenden Werkstücke 11 und 12 mit geschlossenen kreisförmigen Querschnitten 10 werden eingespannt und bis auf einen Abstand 6 aneinander gefahren werden, wobei sich die zu verschweissenden Stirnflächen 8 und 9 gegenüber liegen. Ein Magnetspulensystem 5 ist um das Werkstück 12 angeordnet. Nach dem Einschalten des Magnetfeldes mit den Polen N und S des Magnetspulensystems 5 und der erforderlichen Spannung U wird ein Lichtbogen 7 gezündet. Das Magnetfeld des Magnetspulensystems versetzt den Lichtbogen 7 in Rotation, so dass die zu verschweissenden Stirnflächen 8, 9 gleichmässig erhitzt werden. Ist die für das Schweissen erforderliche Temperatur erreicht, werden die zu verschweissenden Stirnflächen 8 und 9 der Werkstücke 11 und 12 aneinandergepresst. Nach dem Abkühlen ist der Schweissvorgang beendet.

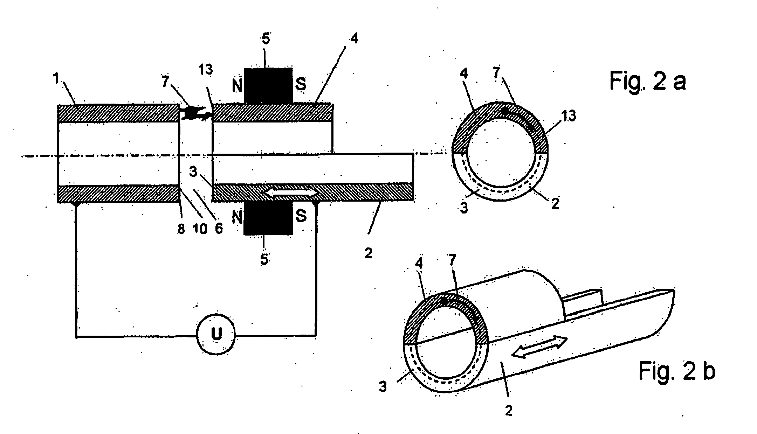

In Fig. 2a ist analog zu Fig. 1 das erfindungsgemässe Verfahren anhand eines Beispiels dargestellt. Die Fig. 2b zeigt die Anordnung der Werkstücke 1 und 2 sowie das Hilfsteil 4 dreidimensional. Hier sind die beiden Werkstücke 1 und 2 zu verschweissen.

Das Werkstück 1 ist rohrförmig mit einem geschlossenen kreisförmigen Querschnitt 10 ausgestaltet. Das Werkstück 2 besitzt einen halbkreisförmigen offenen Querschnitt 3. Das Verfahren läuft wie in der Beschreibung zu Fig. 1 dargestellt ab. Dieses Verfahren ist aber nur dann ausführbar, wenn es gelingt den offenen halbkreisförmigen Querschnitt 3 zu schliessen, um mittels des Magnetfeldspulensystems 5 und der angelegten Spannung U einen rotierenden Lichtbogen 7 bilden zu können. Dies geschieht erfindungsgemäss mittels des hier im Beispiel gezeigten Hilfsteils 4 mit halbkreisförmiger offenen Fläche 13. Dieses Hilfsteil 4 wird auf das Werkstück 2 in der Weise aufgebracht, dass eine geschlossene Stirnfläche entsteht, die vor dem eigentlichen Schweissprozess mit einem Abstand 6 an die Stirnfläche 8 des gegenüberliegenden Werkstücks 1 herangefahren wird. Das Hilfsteil 4 kann in verschiedenster Weise nach dem Schweissvorgang auf den Berührungsflächen des offenen Bereichs des Werkstücks 2 angebracht werden, z. B. punktgeschweisst etc. Mit diesem Hilfsteil 4 kann der Lichtbogen 7 entlang des so gebildeten geschlossenen kreisförmigen Pfades umlaufen. Nach der Erhitzung der zu verschweissenden Stirnfläche 8 und der offenen Stirnfläche 3 des Werkstückes 2 auf die geeignete Temperatur (bis flüssige und pressbare Phase erreicht ist) wird nur das Werkstück 2 an das Werkstück 1 unter sehr hohem Druck verschweisst. Der offene Flächenbereich 13 des Hilfsteiles 4 wird nicht oder nur sehr schwach druckbelastet, um eine Verschweissung zu vermeiden. Im Bedarfsfalle kann das Hilfsteil 4 nach dem Schweissvorgang entfernt werden.

Die mit dieser Erfindung verbundenen Vorteile liegen insbesondere darin, dass es gelungen ist, auch Werkstücke mit offenen Querschnitten mittels des bekannten Magnetarc-Schweissverfahren zu verbinden. Es ist selbstverständlich denkbar, dass auch Werkstücke, die beide offene Querschnitte aufweisen, mit diesem erfindungsgemässen Verfahren verschweissbar sind. Ebenso kann das erforderliche Magnetspulensystem auf einem der beiden zu verbindenden Werkstücke oder verteilt auf beiden Werkstücken angeordnet sein.

### Bezugszeichentiste:

| | | | |
|---|---|---|---|
| 1 | Werkstück | U | Spannung für Lichtbogen |
| 2 | Werkstück | N | Nordpol des Magnetspulsystem |
| 3 | Offener Querschnitt | S | Südpol des Magnetspulsystem |
| 4 | Hilfsteil | | |
| 5 | Magnetspulsystem | | |
| 6 | Abstand | | |
| 7 | Lichtbogen | | |
| 8 | Stirnfläche | | |
| 9 | Stirnfläche | | |
| 10 | Geschlossener Querschnitt | | |
| 11 | Werkstück | | |
| 12 | Werkstück | | |
| 13 | Offene Fläche | | |

## Patentansprüche

1. Verfahren zum Magnetarc-Schweissen für metallische Werkstoffe, wobei mindestens eines der zu verschweissenden Werkstücke (1, 2) einen offenen Querschnitt aufweist, wobei die beiden Werkstücke (1, 2) eingespannt und aneinander gefahren werden, wobei der offene Querschnitt (3) eines Werkstücks (2) mittels eines geeigneten metallischen Hilfsteils (4) zu einem leitenden geschlossen Bereich überbrückt wird, dass nach Einschalten eines Magnetfeldes eines Magnetspulensystems (5) und des für das Schweissen erforderlichen Stromes die Werkstücke (1, 2) auf einen definierten Abstand (6) gebracht und ein Lichtbogen (7) gezündet wird, wobei das Magnetfeld des Magnetspulensystems (5) den Lichtbogen (7) in Rotation versetzt wird, wobei die zu verschweissenden Stirnflächen (8, 9) gleichmässig erhitzt werden **dadurch gekennzeichnet, dass** anschliessend die zu verschweissenden Flächen (8, 9) der Werkstücke (1, 2) aneinandergepresst werden, wobei der offene Flächenbereich (13) des Hilfsteils (4) nicht an die gegenüberliegende Fläche (8) des Werkstückes (1) angepresst wird.

2. Verfahren nach Anspruch 1, **dadurch gekennzeichnet, dass** der offene Querschnitt (3) einen offenen Kreisumfang bildet.

3. Verfahren nach Anspruch 1, **dadurch gekennzeichnet, dass** der offene Querschnitt (3) U-förmig ausgebildet ist.

4. Verfahren nach den Ansprüchen 1 und 2, **dadurch gekennzeichnet, dass** das Hilfsteil (4) so ausgebildet ist, dass mittels dieses Hilfsteils (4) der offene Kreisumfang des Querschnittes (3) zu einem geschlossenen Kreis gebildet wird.

5. Verfahren nach den Ansprüchen 1 und 2, **dadurch gekennzeichnet, dass** das Hilfsteil (4) so ausgebildet ist, dass mittels dieses Hilfsteils (4) der offene U-förmige Querschnitt (3) zu einem geschlossenen Rechteck gebildet wird.

6. Verfahren nach den Ansprüchen 1 und 2, **dadurch gekennzeichnet, dass** der offene Querschnitt (3) beliebig geformt ist und zusammen mit dem ebenfalls beliebig geformten Hilfsteil (4) einen geschlossenen Bereich ergibt.

7. Verfahren nach mindestens einem der vorherigen Ansprüche, **dadurch gekennzeichnet, dass** das Magnetspulensystem (5) sowohl an einem (1), an dem anderen (2) oder an beiden Werkstücken (1, 2) angeordnet ist.

8. Verfahren nach einem der vorherigen Ansprüche, **dadurch gekennzeichnet, dass** nach dem abgeschlossenen Magnetarc-Schweissvorgang das Hilfsteil (4) entfernt wird.

## Claims

1. Method for Magnetarc welding for metallic materials, wherein at least one of the workpieces (1, 2) to be welded has an open cross section, wherein the two workpieces (1, 2) are braced and moved together, wherein the open cross section (3) of one workpiece (2) is bridged by means of a suitable metallic auxiliary part (4) to form a conducting closed region, wherein, after the activation of a magnetic field of a magnet coil system (5) and of the current required for welding, the workpieces (1, 2) are placed with a defined spacing (6) and an electric arc (7) is ignited, wherein the magnetic field of the magnet coil system (5) sets the electric arc (7) in rotation, wherein the end surfaces (8, 9) to be welded are uniformly heated, **characterized in that** subsequently, the surfaces (8, 9), which are to be welded, of the workpieces (1, 2) are pressed against one another, wherein the open surface region (13) of the auxiliary part (4) is not pressed against the opposite surface (8) of the workpiece (1).

2. Method according to Claim 1, **characterized in that** the open cross section (3) forms an open circle perimeter.

3. Method according to Claim 1, **characterized in that** the open cross-section (3) is of U-shaped design.

4. Method according to Claims 1 and 2, **characterized in that** the auxiliary part (4) is designed such that, by means of said auxiliary part (4), the open circle perimeter of the cross section (3) is formed into a closed circle.

5. Method according to Claims 1 and 2, **characterized in that** the auxiliary part (4) is designed such that, by means of said auxiliary part (4), the open U-shaped cross section (3) is formed into a closed rectangle.

6. Method according to Claims 1 and 2, **characterized in that** the open cross section (3) is of arbitrary shape and, together with the auxiliary part (4), which is likewise of arbitrary shape, forms a closed region.

7. Method according to at least one of the preceding claims, **characterized in that** the magnet coil system (5) is arranged either on one (1), on the other (2) or on both workpieces (1, 2).

8. Method according to one of the preceding claims, **characterized in that**, after the Magnetarc welding process is complete, the auxiliary part (4) is removed.

## Revendications

1. Procédé de soudure à arc magnétique pour matériaux métalliques, dans lequel au moins l'une des pièces à souder (1, 2) présente une section transversale ouverte, les deux pièces (1, 2) étant serrées et amenées l'une contre l'autre, la section transversale ouverte (3) d'une pièce (2) étant surmontée au moyen d'une pièce auxiliaire métallique appropriée (4) pour donner une région conductrice fermée, après l'introduction d'un champ magnétique d'un système de bobine magnétique (5) et du courant requis pour le soudage, les pièces (1, 2) étant amenées à une distance (6) définie et un arc électrique (7) étant allumé, le champ magnétique du système de bobine magnétique (5) mettant l'arc électrique (7) en rotation, les faces frontales à souder (8, 9) étant chauffées uniformément, **caractérisé en ce que** les faces à souder (8, 9) des pièces (1, 2) sont ensuite pressées l'une contre l'autre, la région de face ouverte (13) de la pièce auxiliaire (4) n'étant pas pressée contre la face opposée (8) de la pièce (1).

2. Procédé selon la revendication 1, **caractérisé en ce que** la section transversale ouverte (3) forme une circonférence circulaire ouverte.

3. Procédé selon la revendication 1, **caractérisé en ce que** la section transversale ouverte (3) est réalisée en forme de U.

4. Procédé selon les revendications 1 et 2, **caractérisé en ce que** la pièce auxiliaire (4) est réalisée de telle sorte qu'au moyen de cette pièce auxiliaire (4) la circonférence circulaire ouverte de la section transversale (3) soit formée en un cercle fermé.

5. Procédé selon les revendications 1 et 2, **caractérisé en ce que** la pièce auxiliaire (4) est réalisée de telle sorte qu'au moyen de cette pièce auxiliaire (4) la section transversale (3) en forme de U ouverte soit formée en un rectangle fermé.

6. Procédé selon les revendications 1 et 2, **caractérisé en ce que** la section transversale ouverte (3) a une forme quelconque et constitué conjointement avec la pièce auxiliaire (4) également de forme quelconque une région fermée.

7. Procédé selon au moins l'une quelconque des revendications précédentes, **caractérisé en ce que** le système de bobine magnétique (5) est disposé à la fois sur une (1), l'autre (2) ou les deux pièces (1, 2).

8. Procédé selon l'une quelconque des revendications précédentes, **caractérisé en ce qu'**après la fin de l'opération de soudage à arc magnétique, la pièce auxiliaire (4) est enlevée.
